# EUROPÄISCHE PATENTSCHRIFT

(11) **EP 2 675 039 B1**
(45) Veröffentlichungstag und Bekanntmachung des Hinweises auf die Patenterteilung: **01.10.2014**
(21) Anmeldenummer: 12171983.5
(22) Anmeldetag: 14.06.2012
(51) Int. Cl.: H02K 3/40

(54) **Elektroisolationssystem für eine Hochspannungsmaschine**
Electric isolation system for a high voltage machine
Système d'isolation électrique pour une machine à haute tension

(43) Veröffentlichungstag der Anmeldung: 18.12.2013
(73) Patentinhaber: Siemens Aktiengesellschaft, 80333 München (DE)
(72) Erfinder: Kempen, Stefan, 59821 Arnsberg (DE); Staubach, Christian, 45768 Marl (DE)

(56) Entgegenhaltungen:
- FR-A1- 2 499 306
- JP-A- 10 257 707
- JP-A- 60 102 831
- JP-A- 2011 193 727
- KAUFHOLD M ET AL: "Interface phenomena in stator winding insulation -challenges in design, diagnosis, and service experience", IEEE ELECTRICAL INSULATION MAGAZINE, IEEE SERVICE CENTER, NEW YORK, NY, US, Bd. 11, Nr. 2, 1. März 2002 (2002-03-01), Seiten 27-36, XP011264795, ISSN: 0883-7554
- RUDOLF BRUTSCH ET AL: "Insulating systems for high voltage rotating machines and reliability considerations", ELECTRICAL INSULATION (ISEI), CONFERENCE RECORD OF THE 2010 IEEE INTERNATIONAL SYMPOSIUM ON, IEEE, PISCATAWAY, NJ, USA, 6. Juni 2010 (2010-06-06), Seiten 1-5, XP031733728, ISBN: 978-1-4244-6298-8
- EL-KISHKY M ET AL: "Novel techniques for optimal design and analysis of corona-suppression systems", 2003 IEEE PES TRANSMISSION AND DISTRIBUTION CONFERENCE. CONFERENCE PROCEEDINGS. DALLAS, TX, SEPT. 7 - 12, 2003; [IEEE/PES TRANSMISSION AND DISTRIBUTION CONFERENCE AND EXPOSITION], NEW YORK, NY : IEEE, US, Bd. 2, 7. September 2003 (2003-09-07), Seiten 841-846, XP010725522, DOI: 10.1109/TDC.2003.1335385 ISBN: 978-0-7803-8110-0
- WHEELER J C G ET AL: "Novel stress grading systems for converter-fed motors", IEEE ELECTRICAL INSULATION MAGAZINE, IEEE SERVICE CENTER, NEW YORK, NY, US, Bd. 11, Nr. 1, 1. Januar 2007 (2007-01-01) , Seiten 29-35, XP011265427, ISSN: 0883-7554

## Beschreibung

Die Erfindung betrifft ein Elektroisolationssystem für eine Hochspannungsmaschine.

Eine Hochspannungsmaschine, wie beispielsweise ein Turbogenerator in einem Kraftwerk zur Erzeugung von elektrischer Energie, ist einer hohen mechanischen, thermischen und elektrischen Beanspruchung ausgesetzt. Der Turbogenerator weist insbesondere ein Blechpaket und eine Wicklung elektrischer Leiter auf. Das Blechpaket weist eine Mehrzahl an Nuten auf, in denen die Leiter eingebracht sind. An den beiden Enden des Blechpakets stehen die elektrischen Leiter aus dem Blechpaket hervor und bilden jeweils einen Wickelkopf. Die Leiter im Bereich der Wickelköpfe weisen unmittelbar an ihrem Austritt aus dem Blechpaket einen geraden Abschnitt auf, anschließend einen gekrümmten Abschnitt und darauffolgend einen weiteren geraden Abschnitt, so dass die Leiter in das Blechpaket zurückgeführt werden.

Die Leiter sind von einer Hauptisolation umhüllt, die die Leiter gegeneinander, gegen das Blechpaket und gegen die Umgebung elektrisch isolieren. Zur Vermeidung von Teilentladungen im Bereich der Wickelköpfe an der Grenzfläche zwischen der Hauptisolation und dem die Hauptisolation umgebenden Gas ist im Bereich der Wickelköpfe ein Endenglimmschutz auf die Hauptisolation aufgebracht. Die Teilentladungen können insbesondere während einer Hochspannungsprüfung auftreten, weil die hier auftretenden Spannungen höher als im normalen Betrieb der Hochspannungsmaschine sind. Der Endenglimmschutz erstreckt sich ausgehend von dem Blechpaket und bedeckt eine Teillänge der Hauptisolation. Die Funktion des Endenglimmschutzes ist es, den Abbau des elektrischen Potentials entlang der Oberfläche des Endenglimmschutzes zu vergleichmäßigen. Dazu ist der Endenglimmschutz mit einem Material ausgebildet, das bei zunehmender elektrischer Spannung einen abnehmenden elektrischen Widerstand hat. Dies wird beispielsweise durch den Einsatz von Partikeln aus Siliziumcarbid in dem Endenglimmschutz erreicht. Der Endenglimmschutz bewirkt somit eine Feldsteuerung, deren Aufgabe es ist, die Ausbildung von hohen elektrischen Feldstärken, die zu Teilentladungen führen können, entlang des Endenglimmschutzes zu unterbinden.

Die Länge des Endenglimmschutzes und damit auch die Länge der Wickelköpfe sind dadurch bedingt, dass das elektrische Potential über die Länge des Endenglimmschutzes vollständig abgebaut wird. Lange Wickelköpfe sind im Betrieb der Hochspannungsmaschine jedoch anfällig für die Anregung von Schwingungen, welche die Lebensdauer der Wickelköpfe verkürzen.

Das Dokument JP 2011193727 offenbart ein Elektroisolationssystem.

Aufgabe der Erfindung ist es, ein Elektroisolationssystem für eine Hochspannungsmaschine zu schaffen, die kurze und dadurch schwingungsresistente Wickelköpfe aufweist.

Das erfindungsgemäße Elektroisolationssystem für einen zumindest teilweise aus einem Blechpaket einer Hochspannungsmaschine hervorstehenden elektrischen Leiter weist eine den Leiter umhüllende elektrische Hauptisolation, einen Endenglimmschutz, der die Hauptisolation in einem Bereich außerhalb des Blechpakets umhüllt, und eine Brücke auf, die an den Endenglimmschutz und an den Leiter derart angeschlossen ist, dass der Endenglimmschutz an seinem dem Blechpaket abgewandten Endbereich elektrisch leitend mit dem Leiter verbunden ist. Die erfindungsgemäße Hochspannungsmaschine weist mindestens ein erfindungsgemäßes Elektroisolationssystem auf. Dadurch ist es vorteilhaft möglich, den Endenglimmschutz und damit auch die Wickelköpfe der Hochspannungsmaschine kürzer auszuführen, ohne dass Teilentladungen im Bereich der Wickelköpfe auftreten. Dies wird dadurch erreicht, dass der elektrisch leitend mit dem Leier verbundene Endenglimmschutz effizienter das elektrische Potential aufbaut, als es ohne die Brücke möglich wäre. Indem die Wickelköpfe kürzer ausgeführt werden können, sind sie weniger anfällig für eine Schwingungsanregung, so dass sie vorteilhaft eine lange Lebensdauer haben.

Zur Herstellung des Elektroisolationssystems werden die elektrischen Leiter mit einem Isolationsband umwickelt. Alternativ können sie auch mit einem Isolationspapier umwickelt werden. In einem folgenden Arbeitsschritt wird das Isolationsband in einer Tränkanlage mit einem Kunstharz imprägniert und anschließend wird das Kunstharz ausgehärtet. Die Gesamtlänge des Blechpakets mit den beiden Wickelköpfen ist durch die Größe der Tränkanlage vorgegeben. Indem die Wickelköpfe kürzer ausgeführt sind, kann die Länge des Blechpakets vergrößert werden, wodurch mit der vorhandenen Tränkanlage eine Hochspannungsmaschine hergestellt werden kann, die eine höhere maximale Leistung hat als es mit einer Hochspannungsmaschine mit längeren Wickelköpfen möglich ist.

Bevorzugtermaßen weist die Brücke einen elektrisch leitenden Ring auf, der unmittelbar benachbart an dem Endbereich um die Hauptisolation angeordnet ist. Dadurch ist der Endenglimmschutz gleichmäßig über seinen Umfang elektrisch kontaktiert. Dabei ist bevorzugt, dass der Ring Kupfer aufweist. Jedoch sind auch andere elektrisch leitende Materialien denkbar. Der Ring ist bevorzugt an das dem Blechpaket abgewandten Ende des Endenglimmschutzes kontaktiert. Alternativ ist es bevorzugt, dass der Ring zwischen dem Endenglimmschutz und der Hauptisolation angeordnet ist. Alternativ ist der Ring bevorzugt radial außen an dem Endenglimmschutz angeordnet. Bevorzugtermaßen ist der Ring mit dem Endenglimmschutz verlötet. Somit ergibt sich vorteilhaft eine gute elektrische Anbindung des Rings an den Endenglimmschutz.

Die Brücke weist bevorzugt einen Brückenleiter auf, mittels dem der Ring mit dem Leiter elektrisch leitend verbunden ist. Der Brückenleiter kann beispielsweise ein elektrisch leitender Draht sein. Es ist ebenfalls bevorzugt, dass der Brückenleiter Kupfer oder andere elektrisch leitende Materialien aufweist. Bevorzugtermaßen ist der Brückenleiter durch die Hauptisolation geführt. Die Hauptisolation kann dazu einen Kanal aufweisen, durch den der Brückenleiter geführt ist. Ebenfalls ist denkbar, dass der Brückenleiter mit dem Isolationsband um den elektrischen Leiter gewickelt ist. Alternativ ist es bevorzugt, dass der Brückenleiter um das dem Blechpaket abgewandten Längsende der Hauptisolation herumgeführt ist. Bevorzugtermaßen ist der Brückenleiter mit dem Ring und/oder dem Leiter verlötet. Ebenso ist denkbar, dass der Brückenleiter mit einem Leiterring elektrisch leitend verbunden ist, der unmittelbar um den Leiter angeordnet ist, oder dass der Leiter ein Loch aufweist, in das der Draht eingebracht ist.

Bevorzugtermaßen sind mindestens zwei Drittel der Länge des Endenglimmschutzes auf einem geraden Teil des elektrischen Leiters aufgebracht.

Im Folgenden wird anhand der beigefügten schematischen Zeichnungen die Erfindung näher erläutert. Es zeigen:
Figur 1 einen Längsschnitt durch eine Hochspannungsmaschine mit dem erfindungsgemäßen Elektroisolationssystem und
Figuren 2 bis 5 die Ergebnisse numerischer Simulationen der elektrischen Feldstärke für verschiedene Elektroisolationssysteme.

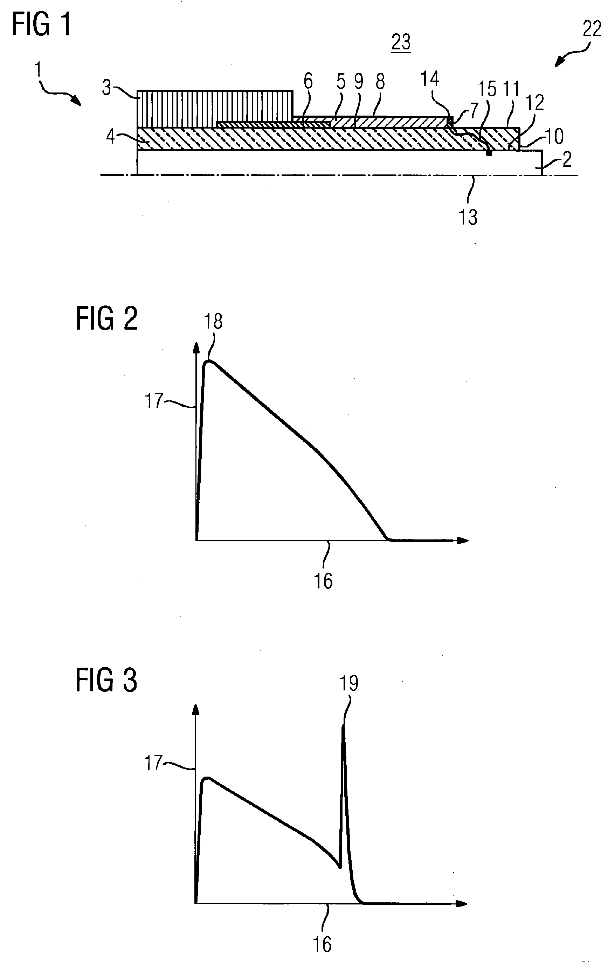

Wie es aus Figur 1 ersichtlich ist, weist eine Hochspannungsmaschine 22 ein Blechpaket 3, einen elektrischen Leiter 2 und ein Elektroisolationssystem 1 auf. Der elektrische Leiter 2 ist in Nuten des Blechpakets 3 angeordnet und steht an den axialen Enden des Blechpakets 3 hervor. In Figur 1 ist ein gerader Abschnitt des Leiters 2 dargestellt, denkbar ist, dass der Leiter 2 anschließend an dem geraden Abschnitt einen gekrümmten Abschnitt aufweist und der Leiter 2 zurück in das Blechpaket 3 geführt ist. Der Leiter 2 hat einen kreisförmigen Querschnitt mit einer Leiterachse 13. Möglich sind jedoch beliebige Querschnitte, wie beispielsweise ein rechteckiger Querschnitt.

Das Elektroisolationssystem 1 weist eine Hauptisolation 4, einen Endenglimmschutz 5 und einen Außenglimmschutz 6 auf. Die Hauptisolation 4 umhüllt den Leiter 2 unmittelbar, um im Bereich des Blechpakets 3 den Leiter 2 elektrisch von dem Blechpaket 3 zu isolieren und außerhalb des Blechpakets 3 den Leiter 2 gegen die Umgebung 23 zu isolieren. Denkbar ist, dass zur Vermeidung von Grenzflächenteilentladungen zwischen dem Leiter 2 und der Hauptisolation 4 eine schwach leitende Innenpotentialsteuerung vorgesehen ist. Außerhalb des Blechpakets 3 erstreckt sich die Hauptisolation 4 nicht über die vollständige Länge des Leiters 2, so dass abgewandt vom Blechpaket 3 die Hauptisolation 4 ein Längsende 10 aufweist. Prinzipiell ist jedoch denkbar, dass sich die Hauptisolation 4 über den vollständigen Wickelkopf erstreckt.

Der Außenglimmschutz 6 umhüllt die Hauptisolation 4 in einem Bereich, der sowohl innerhalb als auch außerhalb des Blechpakets 3 liegt. Möglich ist auch, dass der Außenglimmschutz nur außerhalb des Blechpakets 3 angeordnet ist. Der Außenglimmschutz 6 ist schwach leitend, geerdet und dazu vorgesehen, Teilentladungen an der Grenzfläche der Hauptisolation 4 mit dem Blechpaket 3 bzw. an der Grenzfläche der Hauptisolation 4 mit dem Endenglimmschutz 5 zu unterbinden.

Der Endenglimmschutz 5 erstreckt sich ausgehend von dem Blechpaket 3 nicht über die vollständige Länge der Hauptisolation 4 und umhüllt sowohl den Außenglimmschutz 6 als auch die Hauptisolation 4. Es ist jedoch ebenso denkbar, dass der Endenglimmschutz 5 sich ausgehend von dem dem Blechpaket 3 abgewandten Ende des Außenglimmschutzes erstreckt. Es ist vorgesehen, dass zumindest zwei Drittel der Länge des Endenglimmschutzes 5 auf einem geraden Abschnitt des elektrischen Leiters 2 liegen. Dem Blechpaket 3 abgewandt weist der Endenglimmschutz 5 ein Längsende 7 auf. Wirkung der Erfindung ist es, die Länge des Endenglimmschutzes 5, d.h. den Abstand zwischen dem Blechpaket 3 und dem Längsende 7, zu verkürzen, ohne dass Teilentladungen an der Radialaußenseite 8 des Endenglimmschutzes 5 auftreten. Unmittelbar benachbart an dem Längsende 7 ist ein elektrisch leitender Ring 14 angebracht. Denkbar ist ebenfalls, dass der Ring 14 unmittelbar benachbart an der Radialaußenseite 8 oder unmittelbar benachbart an der Radialinnenseite 9 des Endenglimmschutzes 5 in einem Bereich des dem Blechpaket 3 abgewandten Ende des Endenglimmschutzes 5 angeordnet ist. Denkbar ist, dass der Ring 14 mit dem Endenglimmschutz 5 verlötet ist.

Der Ring 14 ist elektrisch leitend mit einem Brückenleiter 15 verbunden, der mit dem Leiter 2 elektrisch leitend verbunden ist, so dass der Endenglimmschutz 5 elektrisch leitend mit dem Leiter 2 verbunden ist. Der Brückenleiter 15 ist durch einen Kanal durch die Hauptisolation 4 geführt. Alternativ ist es möglich, den Brückenleiter 15 axial außerhalb des Längsendes 10 der Hauptisolation 4 herum zu führen.

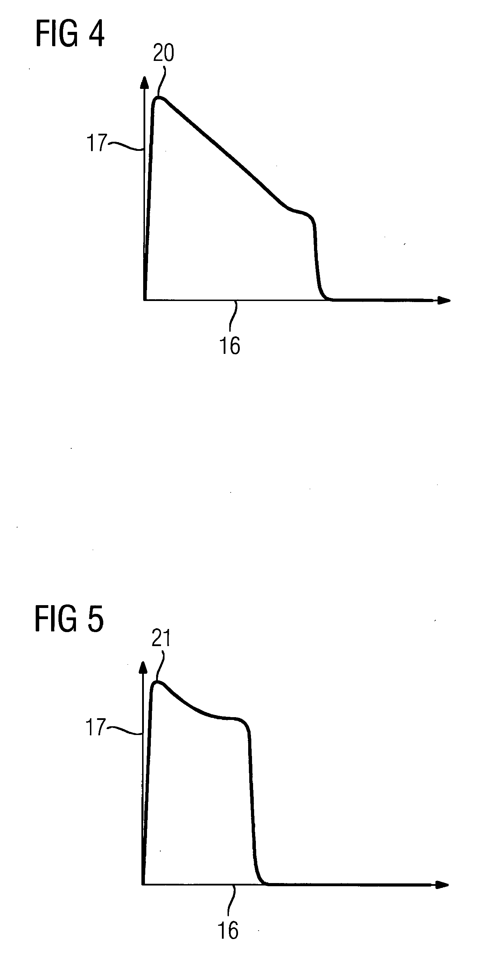

In den Diagrammen aus Figuren 2 bis 5 sind vier verschiedene Feldstärkeverläufe 18 bis 21 für vier verschiedene Elektroisolationssysteme dargestellt. Die Endenglimmschutze aus Figuren 2 und 3 sind herkömmlich ausgebildet, wohingegen die Endenglimmschutze aus Figuren 4 und 5 erfindungsgemäß elektrisch leitend mit dem elektrischen Leiter 2 verbunden sind. Die Endenglimmschutze aus Figuren 3 und 4 haben 80 % der Länge des Endenglimmschutzes aus Figur 2, der Endenglimmschutz aus Figur 5 hat 50 % der Länge des Endenglimmschutzes aus Figur 2.

Innerhalb des Blechpakets 3 weist das elektrische Feld nur eine radiale Komponente auf, wohingegen außerhalb des Blechpakets 3 das elektrische Feld sowohl eine radiale als auch eine tangentiale Komponente aufweist. Die tangentiale Feldstärkekomponente ist dabei parallel zu der Leiterachse 13 gerichtet. Aufgetragen in den Diagrammen ist jeweils die tangentiale Feldstärkekomponente entlang der Oberfläche des Endenglimmschutzes. Dabei ist über der Abszisse 16 jeweils der Abstand von dem Blechpaket 3 und über die Ordinate 17 jeweils die elektrische Feldstärke der tangentialen Feldstärkekomponente aufgetragen. Beim Auslegen der Feldstärkeverläufe ist darauf zu achten, dass die elektrische Feldstärke unter einem Schwellenwert ist, so dass elektrische Teilentladungen auf der Oberfläche des Endenglimmschutzes vermieden werden.

Alle vier Feldstärkeverläufe 18 bis 21 zeichnen sich dadurch aus, dass sie im Ursprung des jeweiligen Koordinatensystems eine Feldstärke von Null haben. Anschließend steigen sie in einem kurzen Bereich auf ein lokales Maximum an, um danach wieder abzufallen. Am Ende des jeweiligen Endenglimmschutzes ist die Feldstärke ebenfalls Null.

Bei dem ersten Feldstärkeverlauf 18 aus Figur 2 fällt die Feldstärke ausgehend von dem lokalen Maximum homogen bis zum Ende des Endenglimmschutzes ab. Der zweite Feldstärkeverlauf 19 aus Figur 3 zeichnet sich durch eine Feldstärkeüberhöhung im Bereich des dem Blechpaket abgewandten Ende des Endenglimmschutzes in Form eines globales Maximums aus. Im Bereich des globalen Maximums würde es im Betrieb der Hochspannungsmaschine zu einer Teilentladung kommen.

Durch das Vorsehen der elektrisch leitenden Verbindung ist das Auftreten der Feldstärkeüberhöhung im dritten Feldstärkeverlauf 20 aus Figur 4 und im vierten Feldstärkeverlauf 21 aus Figur 5 unterbunden. Der dritte Feldstärkeverlauf 20 und der vierte Feldstärkeverlauf 21 zeichnen sich dadurch aus, dass die Feldstärke über die Länge des Endenglimmschutzes relativ hoch ist, und lediglich an den beiden Enden des Endenglimmschutzes steil abfällt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektroisolationssystem für einen zumindest teilweise aus einem Blechpaket (3) einer Hochspannungsmaschine (22) hervorstehenden elektrischen Leiter (2),
mit einer den Leiter (2) umhüllenden elektrischen Hauptisolation (4), einem Endenglimmschutz (5), der die Hauptisolation (4) in einem Bereich außerhalb des Blechpakets (3) umhüllt, und einer Brücke (14, 15), die an den Endenglimmschutz (5) und an den Leiter (2) derart angeschlossen ist, dass der Endenglimmschutz (5) an seinem dem Blechpaket (3) abgewandten Endbereich elektrisch leitend mit dem Leiter (2) verbunden ist.

2. Elektroisolationssystem gemäß Anspruch 1,
wobei die Brücke (14, 15) einen elektrisch leitenden Ring (14) aufweist, der unmittelbar benachbart an dem Endbereich um die Hauptisolation (4) angeordnet ist.

3. Elektroisolationssystem gemäß Anspruch 2,
wobei der Ring (14) an das dem Blechpaket (3) abgewandten Ende (7) des Endenglimmschutzes (5) kontaktiert.

4. Elektroisolationssystem gemäß Anspruch 2,
wobei der Ring (14) zwischen dem Endenglimmschutz (5) und der Hauptisolation (4) angeordnet ist.

5. Elektroisolationssystem gemäß Anspruch 2,
wobei der Ring (14) radial außen an dem Endenglimmschutz (5) angeordnet ist.

6. Elektroisolationssystem gemäß einem der Ansprüche 2 bis 5,
wobei der Ring (14) mit dem Endenglimmschutz (5) verlötet ist.

7. Elektroisolationssystem gemäß einem der Ansprüche 2 bis 6,
wobei die Brücke (14, 15) einen Brückenleiter (15) aufweist, mittels dem der Ring (14) mit dem Leiter (2) elektrisch leitend verbunden ist.

8. Elektroisolationssystem Anspruch 7,
wobei der Brückenleiter (15) durch die Hauptisolation (4) geführt ist.

9. Elektroisolationssystem gemäß Anspruch 7,
wobei der Brückenleiter (15) um das dem Blechpaket (3) abgewandten Längsende (10) der Hauptisolation (4) herum geführt ist.

10. Elektroisolationssystem gemäß einem der Ansprüche 7 bis 9,
wobei der Brückenleiter (15) mit dem Ring (14) und/oder dem Leiter (2) verlötet ist.

11. Elektroisolationssystem gemäß einem Ansprüche 1 bis 10,
wobei mindestens zwei Drittel der Länge des Endenglimmschutzes (5) auf einem geraden Teil des elektrischen Leiters (2) aufgebracht sind.

12. Hochspannungsmaschine mit mindestens einem Elektroisolationssystem (1) gemäß einem der Ansprüche 1 bis 10.

## Claims

1. Electrical insulation system for an electrical conductor (2) protruding at least partially out of a laminate stack (3) of a high-voltage machine (22), comprising main electrical insulation (4) surrounding the conductor (2), end corona shielding (5), which envelops the main insulation (4) in a region outside the laminate stack (3), and a bridge (14, 15), which is connected to the end corona shielding (5) and to the conductor (2) in such a way that the end corona shielding (5) is electrically conductively connected to the conductor (2) at that end region of said end corona shielding which is remote from the laminate stack (3).

2. Electrical insulation system according to Claim 1, wherein the bridge (14, 15) has an electrically conductive ring (14), which is arranged directly adjacent to the end region around the main insulation (4).

3. Electrical insulation system according to Claim 2, wherein the ring (14) makes contact at that end (7) of the end corona shielding (5) which is remote from the laminate stack (3).

4. Electrical insulation system according to Claim 2, wherein the ring (14) is arranged between the end corona shielding (5) and the main insulation (4).

5. Electrical insulation system according to Claim 2, wherein the ring (14) is arranged radially on the outside of the end corona shielding (5).

6. Electrical insulation system according to one of Claims 2 to 5, wherein the ring (14) is soldered to the end corona shielding (5).

7. Electrical insulation system according to one of Claims 2 to 6, wherein the bridge (14, 15) has a bridge conductor (15), by means of which the ring (14) is electrically conductively connected to the conductor (2).

8. Electrical insulation system according to Claim 7, wherein the bridge conductor (15) is passed through the main insulation (4).

9. Electrical insulation system according to Claim 7, wherein the bridge conductor (15) is passed around that longitudinal end (10) of the main insulation (4) which is remote from the laminate stack (3).

10. Electrical insulation system according to one of Claims 7 to 9, wherein the bridge conductor (15) is soldered to the ring (14) and/or the conductor (2).

11. Electrical insulation system according to one of Claims 1 to 10, wherein at least two thirds of the length of the end corona shielding (5) are applied to a straight part of the electrical conductor (2).

12. High-voltage machine comprising at least one electrical insulation system (1) according to one of Claims 1 to 10.

## Revendications

1. Système d'isolation électrique pour un conducteur (2) électrique en saillie, au moins en partie, d'un paquet ( 3 ) de tôles d'une machine ( 22 ) à haute tension, comprenant une isolation ( 4 ) électrique principale gainant
le conducteur ( 2 ), un dispositif ( 5 ) anti-effluves d'extrémité, qui gaine l'isolation ( 4 ) principale dans une zone à l'extérieur du paquet ( 3 ) de tôles et un pont ( 14 , 15 ) qui est raccordé au dispositif ( 5 ) anti-effluves d'extrémité et au conducteur ( 2 ) de manière à relier le dispositif ( 5 ) anti-effluves d'extrémité, sur sa région d'extrémité éloignée du paquet ( 3 ) de tôles, d'une manière conductrice de l'électricité au conducteur ( 2 ).

2. Système d'isolation électrique suivant la revendication 1, dans lequel le pont ( 14 , 15 ) a une bague ( 14 ) qui est conductrice de l'électricité et qui est disposée autour de l'isolation ( 4 ) principale à proximité immédiate de la région d'extrémité.

3. Système d'isolation électrique suivant la revendication 2, dans lequel la bague ( 14 ) contacte l'extrémité ( 7 ), éloignée du paquet ( 3 ) de tôles, du dispositif ( 5 ) anti-effluves d'extrémité.

4. Système d'isolation électrique suivant la revendication 2, dans lequel la bague ( 14 ) est disposée entre le dispositif ( 5 ) anti-effluves d'extrémité et l'isolation ( 4 ) principale.

5. Système d'isolation électrique suivant la revendication 2, dans lequel la bague ( 14 ) est disposée à l'extérieur radialement sur le dispositif ( 5 ) anti-effluves d'extrémité.

6. Système d'isolation électrique suivant l'une des revendications 2 à 5, dans lequel la bague ( 14 ) est brasée au dispositif ( 5 ) anti-effluves d'extrémité.

7. Système d'isolation électrique suivant l'une des revendications 2 à 6, dans lequel le pont ( 14 , 15 ) a un conducteur ( 15 ) de pont, au moyen duquel la bague ( 14 ) est reliée d'une manière conductrice de l'électricité au conducteur ( 2 ) .

8. Système d'isolation électrique suivant la revendication 7, dans lequel le conducteur ( 15 ) de pont passe à travers l'isolation ( 4 ) principale.

9. Système d'isolation électrique suivant la revendication 7, dans lequel le conducteur ( 15 ) de pont passe autour de l'extrémité ( 10 ) longitudinale de l'isolation ( 4 ) principale éloignée du paquet ( 3 ) de tôles.

10. Système d'isolation électrique suivant l'une des revendications 7 à 9, dans lequel le conducteur ( 15 ) de pont est brasé à la bague ( 14 ) et/ou au conducteur ( 2 ).

11. Système d'isolation électrique suivant l'une des revendications 1 à 10, dans lequel au moins deux tiers de la longueur du dispositif ( 5 ) anti-effluves d'extrémité sont disposés sur une partie rectiligne du conducteur ( 2 ) électrique.

12. Machine à haute tension ayant au moins un système ( 1 ) d'isolation électrique suivant l'une des revendications 1 à 10.
